# EUROPEAN PATENT APPLICATION

(11) **EP 3 037 768 A1**
(43) Date of publication of application: **29.06.2016**
(21) Application number: 15202171.3
(22) Date of filing: 22.12.2015
(51) Int. Cl.: F28D 9/00, F24F 12/00

(54) **HEAT EXCHANGER**

(30) Priority: 22.12.2014 GB 201422995
(71) Applicant: Vent-Axia Group Limited, Crawley, West Sussex RH10 9YX (GB)
(72) Inventor: SAUNDERS, Alan, Crawley, West Sussex RH10 9YX (GB)
(74) Representative: Boden, Keith McMurray

(57) **Abstract**

An air-to-air heat exchanger for a heat recovery ventilation apparatus, comprising an arrangement of spaced plates including a first section having plates with a first spacing and at least one second section having plates with a second spacing which is greater than the first spacing of the plates in the first section, wherein the first section is disposed in opposed relation to an opening of an inlet duct or spigot and has a dimension which is greater than and extends beyond the opening of the inlet duct or spigot, and the at least one second section is disposed outwardly in relation to the first section.

## Description

The present invention relates to a heat exchanger, in particular an air-to-air plate heat exchanger, and a heat recovery ventilation apparatus incorporating the same.

Heat recovery ventilation apparatus conventionally use air-to-air plate heat exchangers. The plates are typically made of aluminium or a polymer, often polystyrene. The design of the heat exchanger determines the efficiency of the heat recovery and the pressure drop of the air flow. The higher the pressure drop, the higher the power of the motor which is required to move air through the heat recovery apparatus. The ideal heat exchanger would have a low pressure drop and a high efficiency, but in practice efficiency and pressure drop have to be compromised one against the other - as one increases, the other decreases.

It is an aim of the present invention to provide an improved heat exchanger, in particular an air-to-air plate heat exchanger, and a heat recovery ventilation apparatus incorporating the same.

In one aspect the present invention provides a heat recovery ventilation apparatus, comprising: a heat exchanger which includes an arrangement of spaced plates between ones of which an air flow is directed; and a housing which includes a cavity in which the heat exchanger is disposed, and inlet and outlet ducts or spigots which are fluidly connected to the cavity, such that an air flow is delivered through the inlet spigot, into the heat exchanger and out of the outlet spigot; wherein the heat exchanger includes a first section having plates with a first spacing, and at least one second section having plates with a second spacing which is different to the first spacing of the plates in the first section.

In another aspect the present invention provides a heat exchanger for a heat recovery ventilation apparatus, comprising an arrangement of spaced plates, wherein the heat exchanger includes a first section having plates with a first spacing, and at least one second section having plates with a second spacing which is different to the first spacing of the plates in the first section.

The present inventor has devised a heat recovery apparatus which allows for the use of a heat exchanger of larger size than conventional in relation to the size of the housing.

Conventional heat exchanger apparatus require a chamber adjacent an inlet duct or spigot which extends across the width of the heat exchanger, such as to provide for transfer of air across the width of the heat exchanger, and so providing for a generally-uniform air flow through the heat exchanger across its width. The requirement for such a chamber necessitates a minimum distance between the inlet spigot and the opposing face of the heat exchanger, which constrains the minimum dimensions of the housing.

The present inventor has, however, recognized that configuration of the heat recovery apparatus to provide the plates of the heat exchanger with differential spacing can allow for an inlet chamber of much reduced size, such that the distance between the inlet spigot and the heat exchanger is shorter, which allows for a smaller housing or a larger heat exchanger for a given size of housing.

By providing the plates of the heat exchanger with differential spacing, the entire width or volume of the heat exchanger is utilized, thereby optimizing the efficiency of the heat exchanger for a given flow rate. With a conventional heat exchanger, having a uniform plate spacing, the flow through the heat exchanger would be confined to a central region in opposed relation to the inlet spigot, given the higher flow resistance or pressure drop to outer regions of the heat exchanger.

Preferred embodiments of the present invention will now be described hereinbelow by way of example only with reference to the accompanying drawings, in which:

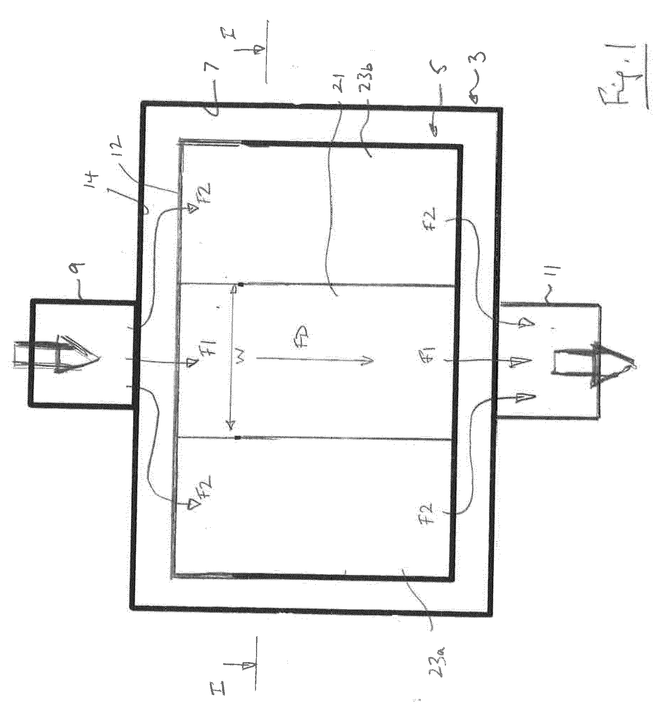

Figure 1 illustrates a heat recovery ventilation apparatus in accordance with a first embodiment of the present invention;
Figure 2 illustrates a sectional view (along section I-I in Figure 1) of the heat recovery ventilation apparatus of Figure 1; and
Figure 3 illustrates a sectional view (along section I-I in Figure 1) of a modified heat exchanger of the heat recovery ventilation apparatus of Figure 1.

The heat recovery ventilation apparatus comprises a housing 3 and a heat exchanger 5 which is disposed within the housing 3.

The housing 3 includes a cavity 7 in which the heat exchanger 5 is disposed, and inlet and outlet ducts or spigots 9, 11, in this embodiment axially aligned, which are fluidly connected to the cavity 7, such that an air flow is delivered through the inlet spigot 9, into the heat exchanger 5 and out of the outlet spigot 11.

In this embodiment the heat exchanger 5 and the cavity 7 are rectangular in plan section.

In this embodiment the heat exchanger 5 is disposed within the cavity 7 such that an inlet side 12 of the heat exchanger 5 is less than 50 mm, optionally less than 25 mm, from an adjacent wall 14 of the cavity 7.

The heat exchanger 5 is a plate heat exchanger which includes an arrangement of spaced plates 15, here in substantially parallel relation, between ones of which the air flow is directed. In this embodiment the plates 15 are arranged substantially parallel to the principal flow direction FD between the inlet and outlet ducts or spigots 9, 11.

In this embodiment the plates 15 are formed of a plastic material, here a polymer, such as polystyrene.

In this embodiment the heat exchanger 5 includes a first section 21 having plates 15 with a first spacing d1, and at least one second section 23 having plates 15 with a second spacing d2 which is different to the first spacing d1 of the plates 15 in the first section 21.

In this embodiment the second spacing d2 is greater than the first spacing d1.

In this embodiment the first section 21 is disposed in opposed relation to the opening of the inlet spigot 9, and the at least one second section 23 is disposed outwardly in relation to the first section 21.

In this embodiment the first section 21 has a lateral width W which is greater than and extends beyond the opening of the inlet spigot 9.

In this embodiment the first section 21 is disposed in opposed relation to the opening of the outlet spigot 11.

In this embodiment the first section 21 has a lateral width W which is greater than and extends beyond the opening of the outlet spigot 11.

With this arrangement, the first, inner section 21 and the at least one second, outer section 23 provide a different flow resistance or pressure drop to the delivered air flow, with the inner section 21 providing a higher flow resistance or pressure drop to the flow component F1 therethrough and the at least one outer section 23 providing a reduced flow resistance or pressure drop to the flow component F2 therethrough. This arrangement acts to promote air flow through the at least one outer section 23. As discussed above, in a conventional plate heat exchanger having plates of uniform spacing, flow through the outer section 23 would be restricted, reducing efficiency, in not utilizing the full volume of the heat exchanger and requiring a higher power to drive the air flow through the heat exchanger 5.

In this embodiment the heat exchanger 5 includes first and second second sections 23a, b, which are disposed to respective outer sides of the first section 21.

In this embodiment the first section 21 and the at least one second section 23 are formed as separate modules, and coupled together to provide a heat exchanger assembly.

In this embodiment the first section 21 and the at least one second section 23 are of substantially equal size.

In one alternative embodiment the first section 21 could be of smaller size than the or each second section 23.

In another alternative embodiment the first section 21 could be of larger size than the or each second section 23.

In this embodiment the plates 15, 17 of the first and second sections 21, 23 are of substantially equal area.

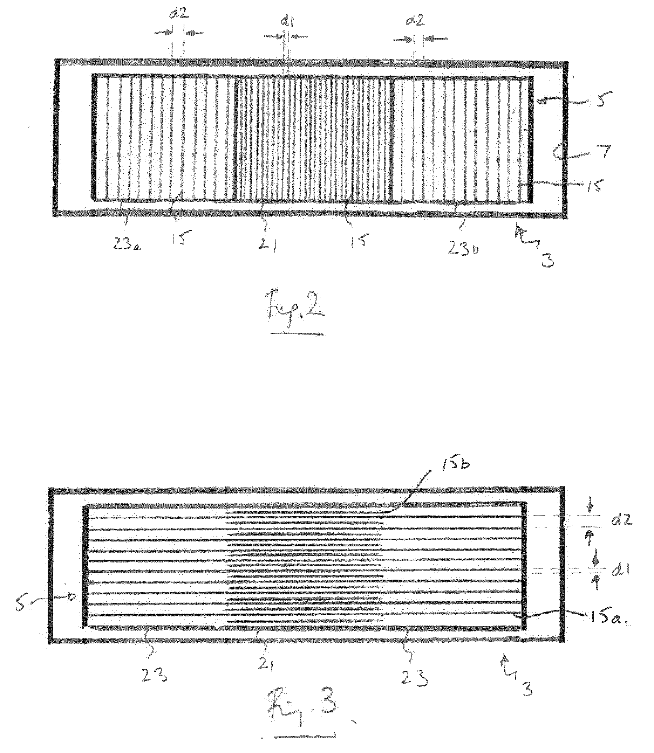

In an alternative embodiment, as illustrated in Figure 3, the first section 21 and the at least one second section 23 are formed as a single, integral module.

In this embodiment the first section 21 and the at least one second section 23 are constructed from plates 15a, 15b of different area, such that a closer spacing d1 is achieved by the provision of smaller plates 15b intermediate larger plates 15a which define the first section 21 and the at least one second section 23.

Finally, it will be understood that the present invention has been described in its preferred embodiments and can be modified in many different ways without departing from the scope of the invention as defined by the appended claims.

## Claims

1. A heat recovery ventilation apparatus, comprising:
an air-to-air heat exchanger which includes an arrangement of spaced plates between ones of which an air flow is directed; and
a housing which includes a cavity in which the heat exchanger is disposed, and inlet and outlet ducts or spigots which are each fluidly connected at an opening to the cavity, such that an air flow is delivered through the inlet spigot, into the heat exchanger and out of the outlet spigot;
wherein the heat exchanger includes a first section having plates with a first spacing, and at least one second section having plates with a second spacing which is greater than the first spacing of the plates in the first section;
wherein the first section is disposed in opposed relation to the opening of the inlet duct or spigot and has a dimension which is greater than and extends beyond the opening of the inlet duct or spigot, and the at least one second section is disposed outwardly in relation to the first section.

2. The apparatus of claim 1, wherein the plates are arranged in substantially parallel relation, optionally the plates are arranged in substantially parallel to an axial direction between the inlet and outlet ducts or spigots.

3. The apparatus of claim 1 or 2, wherein the heat exchanger includes first and second second sections, which are disposed to respective outer sides of the first section.

4. The apparatus of any of claims 1 to 3, wherein (I) the first section is of smaller size than the or each second section, (II) the first section is of larger size than the or each second section, or (III) the first section and the at least one second section are of substantially equal size.

5. The apparatus of any of claims 1 to 4, wherein the first section and the at least one second section are formed as separate modules, which are coupled together, optionally removably coupled, to provide a heat exchanger assembly, optionally the plates of the first and second sections are of substantially equal area.

6. The apparatus of any of claims 1 to 4, wherein the first section and the at least one second section are formed as a single, integral module, optionally the first section and the at least one second section are constructed from plates of different area, with smaller plates being disposed intermediate larger plates to define a section or sections having plates of closer spacing.

7. The apparatus of any of claims 1 to 6, wherein the heat exchanger is disposed within the cavity such that an inlet side of the heat exchanger is less than 50 mm, optionally less than 25 mm, from an adjacent wall of the cavity.

8. An air-to-air heat exchanger for a heat recovery ventilation apparatus, comprising an arrangement of spaced plates including a first section having plates with a first spacing and at least one second section having plates with a second spacing which is greater than the first spacing of the plates in the first section, wherein the first section is disposed in opposed relation to an opening of an inlet duct or spigot and has a dimension which is greater than and extends beyond the opening of the inlet duct or spigot, and the at least one second section is disposed outwardly in relation to the first section.

9. The heat exchanger of claim 8, wherein the plates are arranged in substantially parallel relation, optionally the plates are arranged in substantially parallel to a flow direction through the inlet duct or spigot.

10. The heat exchanger of claim 8 or 9, wherein the heat exchanger includes first and second second sections, which are disposed to respective outer sides of the first section, optionally the first section is a central section.

11. The heat exchanger of any of claims 8 to 10, wherein (I) the first section is of smaller size than the or each second section, (II) the first section is of larger size than the or each second section, or (III) the first section and the at least one second section are of substantially equal size.

12. The heat exchanger of any of claims 8 to 11, wherein the first section and the at least one second section are formed as separate modules, which are coupled together, optionally removably coupled, to provide the heat exchanger, optionally the plates of the first and second sections are of substantially equal area.

13. The heat exchanger of any of claims 8 to 11, wherein the first section and the at least one second section are formed as a single, integral module, optionally the first section and the at least one second section are constructed from plates of different area, with smaller plates being disposed intermediate larger plates to define a section or sections having plates of closer spacing.

14. The heat exchanger of any of claims 8 to 13, wherein the heat exchanger is disposed within the cavity such that an inlet side of the heat exchanger is less than 50 mm, optionally less than 25 mm, from an adjacent wall of the cavity.

15. A heat recovery ventilation apparatus incorporating the heat exchanger of any of claims 8 to 14.
